# EUROPÄISCHE PATENTANMELDUNG

(11) **EP 4 482 174 A1**
(43) Veröffentlichungstag der Anmeldung: **25.12.2024**
(21) Anmeldenummer: 24180697.5
(22) Anmeldetag: 07.06.2024
(51) Int. Cl.: H04R 25/00, G10L 17/18, G10L 25/30, G10L 25/78, G10L 21/0272

(54) **VERFAHREN ZUM ERMITTELN EINER AKTIVITÄT EINER EIGENSTIMME EINES TRÄGERS EINES HÖRGERÄTES, HÖRGERÄT UND HÖRGERÄTESYSTEM**

(30) Priorität: 21.06.2023 DE 102023205783
(71) Anmelder: Sivantos Pte. Ltd., Singapore 539775 (SG)
(72) Erfinder: KAMKAR-PARSI, Homayoun, 91058 Erlangen (DE); ZOBEL, Pascal Stefan, 91058 Erlangen (DE); BARFUß, Hendrik, 91058 Erlangen (DE)
(74) Vertreter: FDST Patentanwälte

(57) **Zusammenfassung**

Die Erfindung betrifft ein Verfahren zum Ermitteln einer Aktivität einer Eigenstimme eines Trägers eines Hörgerätes (4) mit Hilfe einer Signalverarbeitungseinrichtung (8) des Hörgerätes (4), wobei mittels eines ersten Eingangswandlers (6) des Hörgerätes (4) ein erstes Eingangssignal und mittels eines zweiten Eingangswandlers (6) des Hörgerätes (4) ein zweites Eingangssignal generiert wird, wobei die beiden Eingangssignale einer Ermittlungseinheit (22) der Signalverarbeitungseinrichtung (8) zugeführt werden, welche ein neuronales Netzwerk (24) sowie eine dem neuronalen Netzwerk (24) vorgeschaltete Vorstufe (26) aufweist, wobei mittels der Vorstufe (26) basierend auf den beiden Eingangssignalen Informationssignale generiert werden, wobei die Informationssignale durch das neuronale Netzwerk (24) bewertet werden und wobei basierend auf der Bewertung der Informationssignale durch das neuronale Netzwerk (24) von der Ermittlungseinheit (22) ein Ermittlungsergebnis ausgegeben wird.

## Beschreibung

Die Erfindung betrifft ein Verfahren zum Ermitteln einer Aktivität einer Eigenstimme eines Trägers eines Hörgerätes. Darüber hinaus betrifft die Erfindung ein Hörgerät sowie ein Hörgerätesystem.

Als Hörgeräte bezeichnet man typischerweise klassische Hörhilfen, die zur Versorgung von Schwerhörenden dienen. Im weiteren Sinne bezeichnet dieser Begriff jedoch auch Geräte, die zur Unterstützung von normal hörenden Menschen ausgebildet sind. Hörgeräte zur Unterstützung von normal hörenden Menschen werden auch als "Personal Sound Amplification Products" oder "Personal Sound Amplification Devices" (kurz: "PSAD") bezeichnet. Derartige Hörgeräte sind im Gegensatz zu klassischen Hörhilfen nicht zur Kompensation von Hörverlusten vorgesehen, sondern werden gezielt zur Unterstützung und Verbesserung des normalen menschlichen Hörvermögens in spezifischen Hörsituationen eingesetzt.

Unabhängig vom vorgesehenen Einsatzzweck weisen Hörgeräte üblicherweise zumindest einen Eingangswandler, eine Signalverarbeitungseinrichtung und einen Ausgangswandler als wesentliche Komponenten auf. Der zumindest eine Eingangswandler ist dabei in der Regel durch einen akusto-elektrischen Wandler ausgebildet, also beispielsweise durch ein Mikrofon, oder durch einen elektromagnetischen Empfänger, beispielsweise eine Induktionsspule. In vielen Fällen sind mehrere Eingangswandler verbaut, also zum Beispiel ein oder mehrere akusto-elektrische Wandler und ein elektromagnetischer Empfänger. Als Ausgangswandler wird meist ein elektro-akustischer Wandler eingesetzt, beispielsweise ein Miniaturlautsprecher (der auch als "Hörer" bezeichnet wird), oder ein elektromechanischer Wandler, zum Beispiel ein Knochenleitungshörer. Die Signalverarbeitungseinrichtung ist in der Regel durch eine auf einer Leiterplatine realisierte elektronische Schaltung realisiert und weist unabhängig davon üblicherweise einen Verstärker oder eine Verstärkereinheit auf. Außerdem sind Hörgeräte häufig mit einer Sende- und/oder Empfangseinheit ausgestattet, die eine drahtlose Kommunikation mit anderen elektronischen Geräten ermöglicht, insbesondere mit anderen Hörgeräten.

In einigen Anwendungsfällen bilden dann zwei solcher Hörgeräte ein Hörgerätesystem aus, insbesondere ein binaurales Hörgerätesystem. Dabei ist typischerweise eines der Hörgeräte für ein linkes Ohr ausgebildet und das andere Hörgerät ist für ein rechtes Ohr ausgebildet.

Bekanntermaßen kommt es insbesondere bei der Nutzung entsprechender Hörgerätesysteme vor, dass die Wahrnehmung der eigenen Stimme verändert ist und damit ungewohnt und verfremdet wirkt. Da ein solcher Effekt typischerweise unerwünscht ist, werden bei einer Signalverarbeitung durch die Signalverarbeitungseinrichtung bevorzugt unterschiedliche Signalverarbeitungsprozesse genutzt je nachdem, ob die der Signalverarbeitung zugrunde liegenden Signale die eigene Stimme mit abbilden oder nicht.

Um eine solche differenzierende Signalverarbeitung zu ermöglichen, sind entsprechende Hörgeräte eingerichtet für eine sogenannte Eigenstimmermittlung (engl.: Own-Voice Detection, OVD). Sie ermitteln somit dann, wann die eigene Stimme des Trägers des Hörgerätes aktiv ist und wann nicht. Eine solche Eigenstimmermittlung ist dabei zum Beispiel in der EP 3 222 057 B1 beschrieben. Insbesondere wenn die Eigenstimmermittlung zudem in irgendeiner Weise individualisiert ist, so dass ein Erkennen einer bestimmten Stimme eines bestimmten Hörgeräteträgers ermöglicht ist, wird häufig auch von einer Eigenstimmerkennung gesprochen.

Ausgehend hiervon liegt der Erfindung die Aufgabe zugrunde, ein vorteilhaftes Verfahren zum Ermitteln einer Aktivität einer Eigenstimme eines Trägers eines Hörgerätes anzugeben. Außerdem liegt der Erfindung die Aufgabe zugrunde, ein vorteilhaft ausgebildetes Hörgerät sowie ein vorteilhaft ausgebildetes Hörgerätesystem anzugeben.

Diese Aufgabe wird erfindungsgemäß gelöst durch ein Verfahren mit den Merkmalen des Anspruchs 1, durch ein Hörgerät mit den Merkmalen des Anspruchs 14 sowie durch ein Hörgerätesystem mit den Merkmalen des Anspruchs 15. Bevorzugte Weiterbildungen sind in den rückbezogenen Ansprüchen enthalten. Die im Hinblick auf das Verfahren angeführten Vorteile und bevorzugten Ausgestaltungen sind sinngemäß auch auf die Vorrichtungen, also das Hörgerät einerseits und das Hörgerätesystem andererseits, übertragbar und umgekehrt.

Das erfindungsgemäße Verfahren dient dabei zum Ermitteln einer Aktivität einer Eigenstimme oder eigenen Stimme, nämlich der Stimme eines Trägers eines Hörgerätes. Das Verfahren umfasst hierbei zweckdienlicherweise zumindest einen Verfahrensteil, nämlich das Ermitteln der Aktivität selbst, wobei insbesondere dieser Verfahrensteil durch das Hörgerät durchgeführt wird und zwar mithilfe einer Signalverarbeitungseinrichtung des Hörgeräts.

Das erfindungsgemäße Hörgerät wiederum ist ausgebildet und eingerichtet zur Ausführung zumindest eines Verfahrensschrittes des erfindungsgemäßen Verfahrens in zumindest einem Betriebsmodus. Insbesondere ist das erfindungsgemäße Hörgerät ausgebildet zur Durchführung des zuvor genannten zumindest einen Verfahrensteils, nämlich das Ermitteln der Aktivität selbst. Hierzu weist das erfindungsgemäße Hörgerät die zuvor genannte Signalverarbeitungseinrichtung auf. Das erfindungsgemäße Hörgerät ist somit dann eingerichtet, in dem zumindest einem Betriebsmodus automatisch oder automatisiert zu erkennen, wann die Stimme des Trägers des Hörgerätes, also des erfindungsgemäßen Hörgerätes, aktiv ist und wann nicht.

Das erfindungsgemäße Hörgerätesystem schließlich weist zwei erfindungsgemäße Hörgeräte der zuvor genannten Art auf. Dabei ist dann vorzugsweise eines dieser Hörgeräte für ein linkes Ohr ausgebildet und das andere der beiden Hörgeräte für ein rechtes Ohr. Zudem ist das Hörgerätesystem bevorzugt als sogenanntes binaurales Hörgerätesystem ausgebildet.

Im Zuge der Ausführung des Verfahrens, also des erfindungsgemäßen Verfahrens, und insbesondere des zumindest einen Verfahrensteils wird nun mittels eines ersten Eingangswandlers des Hörgerätes, also des erfindungsgemäßen Hörgerätes, ein erstes Eingangssignal generiert und mittels eines zweiten Eingangswandlers des Hörgerätes wird ein zweites Eingangssignal generiert.

Die beiden Eingangssignale werden dann einer Ermittlungseinheit der Signalverarbeitungseinrichtung zugeführt, welche ein neuronales Netzwerk sowie eine dem neuronalen Netzwerk vorgeschaltete Vorstufe aufweist. Alternativ werden die beiden Eingangssignale einer Filterbank der Signalverarbeitungseinrichtung zugeführt und hier in Teilsignale zerlegt. In diesem Fall werden dann die Teilsignale der Ermittlungseinheit zugeführt. Anders ausgedrückt werden die beiden Eingangssignale unzerlegt oder zerlegt der Ermittlungseinheit zugeführt.

Eine entsprechende Filterbank ist dabei typischerweise derart ausgestaltet, dass durch diese Filterbank zwei oder mehr Frequenzkanäle, Frequenzbänder oder Frequenzbereiche vorgegeben sind, nämlich n Frequenzkanäle, Frequenzbänder bzw. Frequenzbereiche, und zumindest näherungsweise eine Zerlegung in Teilsignale derart erfolgt, dass jedes Teilsignal alle Frequenzanteile eines Eingangssignals aufweist, die einem der Frequenzkanäle/Frequenzbänder/Frequenzbereiche k aus k=1 ... n zuzuordnen sind. Hörgeräte mit einer solchen Filterbank werden auch als Multi-Frequenzkanal-Hörgeräte bezeichnet. Ist nun das Hörgerät als ein Multi-Frequenzkanal-Hörgerät ausgebildet, so ist dieses zweckdienlicherweise ausgestaltet als ein n-Frequenzkanal-Hörgerät, wobei n zum Beispiel 2, 4, 8, 16, 32 oder 48 ist. Somit ist dann das Frequenzspektrum in n Frequenzbänder, Frequenzbereiche oder Frequenzkanäle aufgeteilt.

Weiter werden mittels der Vorstufe basierend auf den beiden Eingangssignalen, also den unzerlegten oder zerlegten Eingangssignalen, Informationssignale generiert und diese Informationssignale werden dann durch das neuronale Netzwerk bewertet. Basierend auf der Bewertung der Informationssignale durch das neuronale Netzwerk wird von der Ermittlungseinheit ein Ermittlungsergebnis ausgegeben. Bei jenem Ermittlungsergebnis handelt es sich typischerweise um ein einfaches binäres Signal, welches angibt, ob die Eigenstimme, also die Stimme des Trägers des Hörgerätes, gerade aktiv ist oder nicht.

Basierend auf diesem Ermittlungsergebnis erfolgt dann vorzugsweise die Generierung eines Ausgangssignals für einen Ausgangswandler des Hörgerätes. Dabei werden typischerweise unterschiedliche Signalverarbeitungsprozesse oder Parametrisierungen zur Generierung des Ausgangssignals genutzt je nachdem, ob das Ermittlungsergebnis angibt, dass die eigene Stimme des Trägers aktiv ist oder nicht.

Weiter wird bei dem hier beschriebenen Verfahren bevorzugt auf eine Personalisierung der Ermittlungseinheit verzichtet. D. h., dass die mittels des Verfahrens realisierte Eigenstimmermittlung nicht angepasst ist oder wird an einen bestimmten Träger, also eine bestimmte Person. Es erfolgt daher weiter bevorzugt keine Anpassung der Ermittlungseinheit nach der Abgabe oder Auslieferung durch den Hersteller. In diesem Fall wird somit dann nicht nur die Hardware der Ermittlungseinheit vom Hersteller vorgegeben, sondern auch die Software, die Programmierung und/oder die Einstellung der Ermittlungseinheit. Es findet also insbesondere auch keine nachträgliche Änderung von Parametern oder Parameterwerten statt, zumindest keine, bei der der Träger in irgendeiner Weise mitwirkt.

Bei dem zuvor genannten neuronalen Netzwerk handelt es sich zweckdienlicherweise um ein sogenanntes künstliches neuronales Netzwerk oder kurz KNN (engl.: artificial neuronal network, ANN). Je nach Anwendungsfall ist das künstliche neuronale Netzwerk dabei beispielsweise als sogenanntes feedforward-Netzwerk ausgebildet. Bevorzugt ist es als sogenanntes rekurrentes Netzwerk ausgebildet. Davon unabhängig weist das künstliche neuronale Netzwerk bevorzugt zwei oder mehr sogenannte Schichten auf. Es ist also insbesondere als ein mehrschichtiges neuronales Netzwerk ausgebildet (engl.: deep neuronal network, DNN). Alternativ ist nur eine Schicht ausgebildet. Zweckdienliche Topologien bieten zum Beispiel künstliche neuronale Netzwerke, die nach Art eines LSTM (long short-term memory), GRU (gated recurrent unit) oder CNN (convolutional neural network) ausgebildet sind, oder neuronale Netzwerke, die eine Mischtopologie aufweisen.

Zur Umsetzung des Verfahrens oder zumindest des zuvor genannten zumindest einen Verfahrensteils, nämlich das Ermitteln der Aktivität selbst, weist die Vorstufe weiterhin bevorzugt zwei Filter auf, nämlich ein erstes Filter und ein zweites Filter, wobei das erste Filter einem ersten Filtertyp entspricht und das zweite Filter einem zweiten Filtertyp. In dem zumindest einem Betriebsmodus des Hörgerätes wird dann mittels des ersten Filters ein erstes Filtersignal generiert und mittels des zweiten Filters ein zweites Filtersignal.

Sowohl bei einem Filter des ersten Filtertyps als auch bei einem Filter des zweiten Filtertyps handelt es sich typischerweise um ein Filter zur räumlichen Trennung, insbesondere um einen sogenannten Beamformer. Es handelt sich somit also insbesondere nicht um Filter zur reinen Frequenztrennung, wie sie genutzt werden zur Realisierung einer zuvor genannten Filterbank.

Insbesondere wenn das Hörgerät als ein zuvor beschriebenes Multi-Frequenzkanal-Hörgerät ausgebildet ist, ist es weiter von Vorteil, wenn die Vorstufe als Multi-Frequenzkanal-Vorstufe ausgebildet ist. D. h., dass der Vorstufe entweder in zuvor dargelegter Weise Teilsignale zugeführt werden oder dass die Vorstufe selbst eine Filterbank der zuvor beschriebenen Art aufweist, mit der die zugeführten unzerlegten Eingangssignale in Teilsignale zerlegt werden. Typischerweise ist die Vorstufe dabei ausgelegt als n-Frequenzkanal-Vorstufe, wobei n beispielsweise gleich 2, 4, 6, 8, 16, 32 oder 48 ist. Somit ist dann das Frequenzspektrum in n Frequenzbänder, Frequenzbereiche oder Frequenzkanäle aufgeteilt. Von jedem der Eingangssignale liegen dann in der Vorstufe dementsprechend n Teilsignale vor, zumindest nach der Filterbank. Die Weiterbearbeitung der Teilsignale in der Vorstufe erfolgt dann typischerweise frequenzkanalweise. D. h., dass üblicherweise im Frequenzkanal k aus k=1...n lediglich das Teilsignal des ersten Eingangssignals mit den Frequenzanteilen aus dem Frequenzband k weiterbearbeitet wird sowie das Teilsignal des zweiten Eingangssignals mit den Frequenzanteilen aus dem Frequenzband k.

In vorteilhafter Weiterbildung weist die Multi-Frequenzkanal-Vorstufe für jeden Frequenzkanal k aus k=1 ... n zwei Filter auf, nämlich ein erstes Frequenzkanal-k-Filter und ein zweites Frequenzkanal-k-Filter, wobei das erste Frequenzkanal-k-Filter dem ersten Filtertyp entspricht und das zweite Frequenzkanal-k-Filter dem zweiten Filtertyp. Dabei werden dann in dem zumindest einen Betriebsmodus in jedem Frequenzkanal k zwei Filtersignale generiert, nämlich ein erstes Frequenzkanal-k-Filtersignal mit dem Filter des ersten Typs und ein zweites Frequenzkanal-k-Filtersignal mit dem Filter des zweiten Typs.

Wie zuvor bereits dargelegt handelt es sich sowohl bei einem Filter des ersten Filtertyps als auch bei einem Filter des zweiten Filtertyps typischerweise um ein Filter zur räumlichen Trennung. Hierbei ist dann vorzugsweise jeder der beiden Filtertypen derart ausgebildet, dass mit diesen jeweils eine gemeinsame Richtcharakteristik für die zwei zuvor genannten Mikrofone des Hörgeräts realisiert wird, nämlich eine erste Richtcharakteristik durch den ersten Filtertyp und eine zweite Richtcharakteristik durch den zweiten Filtertyp. Es werden somit dann bevorzugt mit den zwei Filtertypen zwei unterschiedliche Richtcharakteristiken realisiert.

Die beiden Richtcharakteristiken unterscheiden sich dabei insbesondere im Hinblick auf die vorgegebenen Raumrichtungen, in denen die Empfindlichkeit der jeweiligen Richtcharakteristik ihr Maximum erreicht. Die entsprechenden beiden Raumrichtungen werden dabei zweckdienlicherweise bezogen auf eine Frontalrichtung vorgegeben, nämlich insbesondere durch einen Winkel für jede der beiden Raumrichtungen bezogen auf den Winkel 0°, der für die Frontalrichtung vorgegeben wird. Wird das Hörgerät dann vom Träger getragen, so zeigt die Frontalrichtung typischerweise in die Richtung, in die das Gesicht des Trägers des Hörgerätes zeigt. Wenn der Träger dann zudem geradeausblickt, so zeigt die Frontalrichtung darüber hinaus auch in Blickrichtung des Trägers.

Für den ersten Filtertyp wird dann vorzugsweise eine Raumrichtung vorgegeben, die bezogen auf die Frontalrichtung und insbesondere ausgehend vom Träger des Hörgerätes und dessen Kopfausrichtung, in einen vorderen Halbkugelraum zeigt. Weiter bevorzugt wird eine Raumrichtung vorgegeben, die bezogen auf die Frontalrichtung im Bereich zwischen 270° und 90° liegt und insbesondere im Bereich zwischen 340° und 20°, also zum Beispiel bei etwa 0°.

Für den zweiten Filtertyp wird vorzugsweise eine Raumrichtung vorgegeben, die bezogen auf die Frontalrichtung und insbesondere ausgehend vom Träger des Hörgerätes und dessen Kopfausrichtung, in einen hinteren Halbkugelraum zeigt. Weiter bevorzugt wird eine Raumrichtung vorgegeben, die bezogen auf die Frontalrichtung im Bereich zwischen 95° und 265° liegt und insbesondere im Bereich zwischen 160° und 200°, also zum Beispiel bei etwa 180°.

Zweckdienlich sind außerdem Ausführungsvarianten, bei denen der erste und der zweite Filtertyp derart ausgestaltet sind, dass der erste Filtertyp Eigenstimmen weniger stark unterdrückt als der zweite Filtertyp. Es werden hierdurch dann im Betrieb insbesondere Signalanteile, die Eigenstimmen wiedergeben, durch den zweiten Filtertyp stärker unterdrückt als durch den ersten Filtertyp.

Von Vorteil sind zudem Ausführungsvarianten, bei denen der erste Filtertyp ausgebildet ist zum Extrahieren oder Hervorheben von Nutzsignalen von definierten Nutzsignalquellen, insbesondere von definierten Nutzsignalquellen, die frontal vor dem Träger des Hörgerätes positioniert sind. Als definierte Nutzsignalquellen sind dabei typischerweise Gesprächspartner vorgegeben.

Der zweite Filtertyp ist zumindest im Falle einiger vorteilhafter Ausführungsvarianten ausgebildet zum Ausblenden oder Unterdrücken von Eigenstimmen und somit auch zum Ausblenden oder Unterdrücken der Eigenstimme des Trägers des Hörgerätes, also insbesondere des aktuellen Trägers des Hörgerätes. Dabei werden weiter bevorzugt Signalanteile, die Eigenstimmen wiedergeben, stärker ausgeblendet oder unterdrückt als alle sonstigen Signalanteile.

Von Vorteil ist es außerdem, wenn die beiden Filtertypen als statische Filter ausgebildet sind mit jeweils fest vorgegebenen Filterkoeffizienten. Hierbei werden die Filterkoeffizienten bevorzugt vom Hersteller vorgegeben und nach der Vorgabe durch den Hersteller nicht mehr verändert.

Einer alternativen Variante entsprechend ist nur einer der beiden Filtertypen als statisches Filter mit fest vorgegebenen Filterkoeffizienten ausgebildet. Der andere ist dann typischerweise als adaptives Filter ausgestaltet. Zweckdienlich ist auch eine Variante, bei der die beiden Filtertypen als adaptive Filter ausgebildet sind. Bei entsprechenden adaptiven Filtern sind die Filterkoeffizienten nicht fest vorgegeben. Stattdessen werden die Filterkoeffizienten im Betrieb des Hörgerätes durch das Hörgerät angepasst.

Wie zuvor bereits dargelegt ist der erste Filtertyp gemäß zumindest einer bevorzugten Ausführung ausgestaltet als Filter zur räumlichen Trennung mit vorgegebener Raumrichtung im Hinblick auf die Richtcharakteristik sowie ausgebildet zum Extrahieren oder Hervorheben von Nutzsignalen von definierten Nutzsignalquellen. Hierzu ist folgendes anzumerken: Sobald die vorgegebene Raumrichtung abweicht von der Richtung, in der sich die Nutzsignalquelle befindet, wird das Filter zur räumlichen Trennung üblicherweise auch das Nutzsignal zumindest teilweise unterdrücken. Dies ist ein typisches Resultat bei gängigen Filteralgorithmen. Wie stark diese Unterdrückung ist, hängt vor allem davon ab, wie sehr die Raumrichtung und die Richtung der Nutzsignalquelle voneinander abweichen.

Ein solches Vorgeben von Filterkoeffizienten ist typischerweise nicht Teils des zuvor genannten zumindest einen Verfahrensteils, nachfolgend zweiter Verfahrensteil genannt, sondern eines weiteren Verfahrensteils, nachfolgend erster Verfahrensteil genannt, welcher üblicherweise nicht durch das Hörgerät durchgeführt wird. Teil dieses weiteren Verfahrensteils, also des ersten Verfahrensteils, ist dabei bevorzugt ein Verfahrensschritt, bei dem geeignete Filterkoeffizienten ermittelt werden. Diese ermittelten geeigneten Filterkoeffizienten werden dann für die Filter und somit für den zweiten Verfahrensteil, nämlich das Ermitteln der Aktivität selbst, vorgegeben, also insbesondere im Hörgerät hinterlegt.

Geeignete Filterkoeffizienten werden dabei vorzugsweise mit Hilfe einer Auswertung aufgezeichneter akustischer Signale ermittelt. Die Aufzeichnung erfolgt dabei typischerweise mittels eines Hörgeräte-Prototyps oder eines Hörgeräte-Dummys und die Auswertung erfolgt weiter bevorzugt mit Hilfe einer separaten Recheneinheit. Der entsprechende Hörgeräte-Prototyp, Hörgeräte-Dummy bzw. die entsprechende Recheneinheit weist dabei außerdem bevorzugt adaptive Test-Filter auf oder simuliert entsprechende adaptive Test-Filter, mit denen dann geeignete Filterkoeffizienten für die statischen Filter des Hörgerätes ermittelt werden.

Für die Ermittlung geeigneter Filterkoeffizienten für den zweiten Filtertyp werden hierbei typischerweise aufgezeichnete akustische Signale genutzt, bei denen Eigenstimmen verschiedener Testträger aufgezeichnet sind. D. h., dass verschiedene Personen als Testträger agieren, also insbesondere als Testträger eines zuvor genannten Hörgeräte-Prototyps oder Hörgeräte-Dummys, und dass akustische Signale mit deren Eigenstimmen ausgewertet werden, um geeignete Filterkoeffizienten für den zweiten Filtertyp zu finden und diese dann als fest vorgegebene Filterkoeffizienten zu nutzen. Für die Ermittlung geeigneter Filterkoeffizienten für den ersten Filtertyp werden dagegen üblicherweise aufgezeichnete akustische Signale genutzt, bei denen verschiedene Nutzsignalquellen aufgezeichnet sind, die insbesondere frontal vor einem zuvor genannten Testträger oder einem Kunstkopf positioniert sind. Als Nutzsignalquellen dienen dabei typischerweise Gesprächspartner. In beiden Fällen handelt es sich weiter bevorzugt um aufgezeichnete akustische Signale ohne Hintergrundgeräusche.

Im zuvor genannten ersten Verfahrensteil wird außerdem bevorzugt das neuronale Netzwerk trainiert und zwar insbesondere ohne eine Beteiligung des späteren Trägers des Hörgerätes. Das Training erfolgt dabei typischerweise durch den Hersteller des Hörgerätes.

Außerdem wird das neuronale Netzwerk weiter bevorzugt mithilfe einer Anzahl aufgezeichnete akustischer Signale trainiert. Diese umfassen typischerweise die aufgezeichneten akustischen Signale, die zum Ermitteln der geeigneten Filterkoeffizienten genutzt werden. Alternativ oder zusätzlich umfasst die Anzahl aufgezeichneter akustischer Signale für das Trainieren des neuronalen Netzwerks aufgezeichnete akustische Signale mit verschiedenen Hintergrundgeräuschen.

Es werden dann für das Trainieren des neuronalen Netzwerks gemäß einer Ausführungsvariante zum Beispiel aufgezeichnete akustische Signale genutzt, bei denen Eigenstimmen verschiedener Testträger zusammen mit verschiedenen Hintergrundgeräuschen aufgezeichnet sind, und/oder aufgezeichnete akustische Signale, bei denen verschiedene Nutzsignalquellen zusammen mit verschiedenen Hintergrundgeräuschen aufgezeichnet sind, und/oder aufgezeichnete akustische Signale, bei denen Eigenstimmen verschiedener Testträger zusammen mit verschiedene Nutzsignalquellen und zusammen mit verschiedenen Hintergrundgeräuschen aufgezeichnet sind.

Einer weiteren Ausführungsvariante werden Eigenstimmen verschiedener Testträger, verschiedene Nutzsignalquellen und verschiedene Hintergrundgeräusche getrennt aufgezeichnet und nachträglich für das Trainieren des neuronalen Netzwerks kombiniert, gegebenenfalls mit verschiedenen Gewichtungen.

Von Vorteil ist es außerdem, wenn im Zuge des Trainings ein zuvor genannter Hörgeräte-Prototyp oder ein zuvor genannter Hörgeräte-Dummy genutzt wird, um die zuvor genannten akustischen Signale aufzuzeichnen. In einigen Fällen werden die aufgezeichneten Signale weiter genutzt, um zunächst ein neuronales Netzwerk zu trainieren, welches im Hörgeräte-Prototyp bzw. Hörgeräte-Dummy oder durch eine separate Recheneinheit realisiert ist. Das Trainieren des neuronalen Netzwerks im Hörgerät erfolgt dann weiter bevorzugt durch Übertragung des Trainingszustands vom neuronalen Netzwerk im Hörgeräte-Prototyp bzw. Hörgeräte-Dummy bzw. der separaten Recheneinheit auf das neuronale Netzwerk im Hörgerät.

Die Vorstufe der Ermittlungseinheit generiert nun also bevorzugt zwei oder mehr Filtersignale in zuvor beschriebener Weise, also das erste Filtersignal und das zweite Filtersignal oder die ersten Frequenzkanal-n-Filtersignale und die zweiten Frequenzkanal-n-Filtersignale. Dabei wird dann jedes der Filtersignale weiter bevorzugt in der Vorstufe zur Generierung zumindest eines Informationssignals mit einem Referenzsignal verknüpft, welches auf zumindest einem der beiden Eingangssignale basiert.

In vorteilhafter Weiterbildung wird durch die Verknüpfung eines der Filtersignale mit einem der Referenzsignale eine reellwertige Dämpfungsgröße ermittelt, wobei zweckdienlicherweise basierend auf der Dämpfungsgröße ein Informationssignal generiert wird. Gemäß einer Alternative wird eine komplexwertige Dämpfungsgröße ermittelt. Für diese Alternative sind dann zwei Ausführungsvarianten vorgesehen. Im Falle der ersten Ausführungsvariante wird basierend auf der komplexwertigen Dämpfungsgröße ein Informationssignal generiert. Im Falle der zweiten Ausführungsvariante werden dagegen basierend auf der komplexwertigen Dämpfungsgröße zwei Informationssignale generiert. In diesem Fall werden zum Beispiel für einen Realteil und einen Imaginärteil oder eine Amplitude und eine Phase getrennte Informationssignale generiert.

Wie bereits zuvor dargelegt werden die in der Vorstufe generierten Informationssignale durch das neuronale Netzwerk bewertet, wobei zweckdienlicherweise basierend auf der Bewertung ein Bewertungsergebnis durch das neuronale Netzwerk ausgegeben wird. Die Bewertung der Informationssignale und insbesondere der Dämpfungsgrößen erfolgt dabei weiter bevorzugt derart, dass durch das neuronale Netzwerk als Bewertungsergebnis ein Prädiktionswert, nämlich eine Art Wahrscheinlichkeitswert, ausgegeben wird, insbesondere ein Wert im Wertebereich von 0 bis 1.

Weiter bevorzugt wird das Bewertungsergebnis des neuronalen Netzwerks einer Endstufe der Ermittlungseinheit zugeführt, welche vorzugsweise eine Komparatoreinheit aufweist und zweckdienlicherweise dem neuronalen Netzwerk nachgeschaltet ist. In der Komparatoreinheit wird das Bewertungsergebnis dann außerdem bevorzugt einer Referenz, insbesondere einem Schwellenwert, gegenübergestellt, wodurch ein Ermittlungsergebnis generiert wird. Liegt dann beispielsweise der zuvor genannte Wahrscheinlichkeitswert über dem zuvor genannten Schwellenwert, so wird als Ermittlungsergebnis ermittelt, dass die eigene Stimme des Trägers aktiv ist. Liegt der Wahrscheinlichkeitswert dagegen unter dem Schwellenwert, so wird als Ermittlungsergebnis ermittelt, dass die eigene Stimme nicht aktiv ist. Dieses Ermittlungsergebnis wird dann vorzugsweise von der Ermittlungseinheit ausgegeben.

Einer weiteren Ausführungsvariante entsprechend wird in der Komparatoreinheit zwar wiederum das Bewertungsergebnis der Referenz gegenübergestellt, es wird jedoch hierdurch lediglich ein vorläufiges Ermittlungsergebnis generiert. Das vorläufige Ermittlungsergebnis wird dann weiter bevorzugt zusammen mit einem weiteren vorläufigen Ermittlungsergebnis in der Endstufe, beispielsweise in einer zusätzlichen Logikeinheit der Endstufe, ausgewertet, wodurch dann das Ermittlungsergebnis ermittelt wird, also das endgültige Ermittlungsergebnis. Dieses Ermittlungsergebnis wird dann typischerweise von der Ermittlungseinheit ausgegeben
Dabei wird das weitere vorläufige Ermittlungsergebnis bevorzugt von einer weiteren Ermittlungseinheit in einem weiteren Hörgerät ermittelt und von diesem Hörgerät übermittelt. Diese Variante des Verfahrens ist insbesondere von Vorteil bei Hörgerätesystemen mit zwei Hörgeräten der zuvor beschriebenen Art. Bei einem derartigen Hörgerätesystem weist vorzugsweise jedes der beiden Hörgeräte eine zuvor beschriebene Signalverarbeitungseinrichtung mit Ermittlungseinheit auf. In dem zumindest einem Betriebsmodus wird dann vorzugsweise in jeder Ermittlungseinheit ein vorläufiges Ermittlungsergebnis generiert. Das vorläufige Ermittlungsergebnis eines Hörgerätes wird dann typischerweise drahtlos an das andere Hörgerät übermittelt und hier zusammen mit dem eigenen vorläufigen Ermittlungsergebnis ausgewertet. Das dabei ermittelte endgültige Ermittlungsergebnis wird von der entsprechenden Ermittlungseinheit ausgegeben. Dieses steht dann intern zur Verfügung. In dem anderen Hörgerät läuft vorzugsweise parallel quasi derselbe Prozess ab. Auch hier werden die beiden vorläufigen Ermittlungsergebnisse ausgewertet und es wird ein endgültiges Ermittlungsergebnis ermittelt.

Unabhängig davon weist jedes erfindungsgemäße Hörgerät zumindest die zwei zuvor genannten Eingangswandler, die zuvor genannte Signalverarbeitungseinrichtung und den zuvor genannten Ausgangswandler als wesentliche Komponenten auf. Jeder dieser Eingangswandler ist dabei in der Regel durch einen akusto-elektrischen Wandler ausgebildet, also beispielsweise durch ein Mikrofon. Als Ausgangswandler dient meist ein elektro-akustischer Wandler, beispielsweise ein Miniaturlautsprecher, oder ein elektromechanischer Wandler, zum Beispiel ein Knochenleitungshörer. Die Signalverarbeitungseinrichtung ist in der Regel durch eine auf einer Leiterplatine realisierte elektronische Schaltung realisiert und weist unabhängig davon die Ermittlungseinheit auf sowie üblicherweise zudem einen Verstärker oder eine Verstärkereinheit. Außerdem ist jedes erfindungsgemäße Hörgerät typischerweise mit einer Sende- und/oder Empfangseinheit ausgestattet, die eine drahtlose Kommunikation mit anderen elektronischen Geräten ermöglicht, insbesondere mit einem anderen erfindungsgemäßen Hörgerät.

Ausführungsbeispiele der Erfindung werden nachfolgend anhand einer schematischen Zeichnung näher erläutert. Darin zeigen:
- Fig. 1: in einer Blockschaltbilddarstellung ein binaurales Hörgerätesystem mit einem linken Hörgerät und einem rechten Hörgerät,
- Fig. 2: in einer Blockschaltbilddarstellung eine Signalverarbeitungseinrichtung des linken Hörgeräts mit einer Ermittlungseinheit,
- Fig. 3: in einer Blockschaltbilddarstellung die Ermittlungseinheit mit einer Vorstufe mit vier Kanälen,
- Fig. 4: in einer Blockschaltbilddarstellung einer der vier Kanäle mit zwei Messbausteinen,
- Fig. 5: in einer Blockschaltbilddarstellung einer der zwei Messbausteine mit einem Filter sowie
- Fig. 6: in einer Draufsicht eine Testanordnung.

Einander entsprechende Teile sind in allen Figuren jeweils mit den gleichen Bezugszeichen versehen.

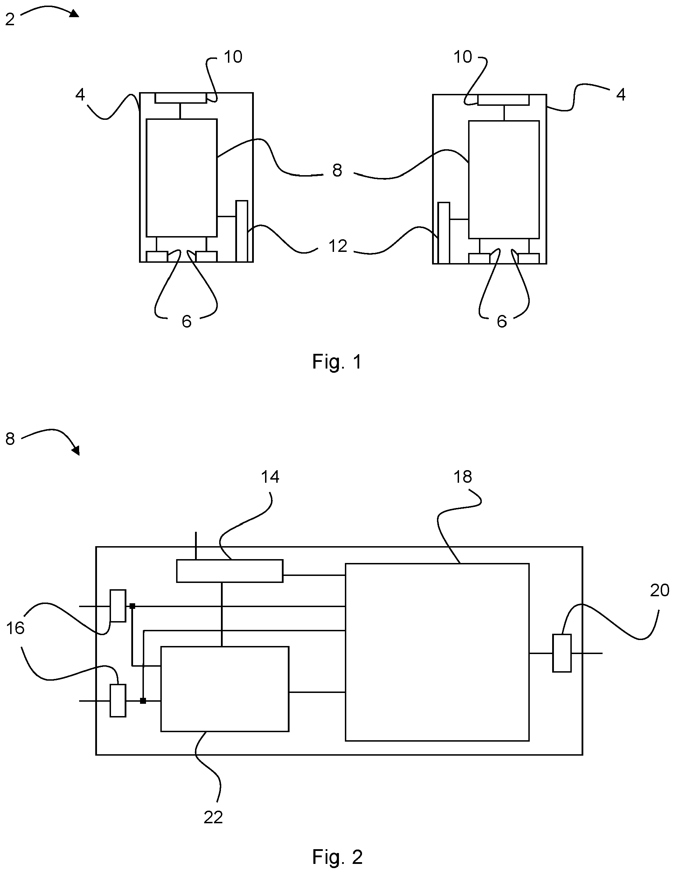

Ein nachfolgend exemplarisch beschriebenes und in Fig. 1 schematisch dargestelltes Hörgerätesystem 2 besteht aus zwei Hörgeräten 4 und ist vorzugsweise als ein binaurales Hörgerätesystem 2 ausgebildet. Jedes der beiden Hörgeräte 4, von denen typischerweise eines für ein linkes Ohr ausgebildet ist und eines für ein rechtes Ohr, weist im Ausführungsbeispiel zwei Eingangswandler 6, eine Signalverarbeitungseinrichtung 8, einen Ausgangswandler 10 und eine Antenneneinheit 12 auf.

Jeder der Eingangswandler 6 ist dabei im Ausführungsbeispiel durch ein Mikrofon ausgebildet. Als Ausgangswandler 10 dienen exemplarisch Miniaturlautsprecher. Die Signalverarbeitungseinrichtungen 8 sind bevorzugt jeweils durch eine auf einer Leiterplatine realisierte elektronische Schaltung realisiert. Die Antenneneinheiten 12 dienen zur drahtlosen Kommunikation und insbesondere zum Datenaustausch zwischen den beiden Hörgeräten 4.

Die Signalverarbeitungseinrichtungen 8 der beiden Hörgeräte 4 sind im Ausführungsbeispiel im Wesentlichen identisch ausgestaltet. Eine dieser Signalverarbeitungseinrichtungen 8 ist in Fig. 2 in einem Blockschaltbild schematisch dargestellt und wird nachfolgend näher beschrieben. Sie weist mehrere Einheiten auf, nämlich eine Sende- und Empfangseinheit 14, zwei Analog-Digital Wandler 16, eine Haupteinheit 18, einen Digital-Analog-Wandler 20 sowie eine Ermittlungseinheit 22. Zumindest eine dieser Einheiten weist weiter mehrere Subeinheiten auf, nämlich die Ermittlungseinheit 22.

Für jede der Einheiten und jede der Subeinheiten, und insbesondere jede nachfolgend genannte Subeinheit, gilt dabei, dass diese je nach Anwendungsfall durch eine eigene, nur die entsprechende Einheit bzw. Subeinheit ausbildende, elektronische Schaltung ausgebildet ist oder lediglich durch einen eigenen Programmbaustein/Softwarebaustein. Typisch ist insbesondere eine Ausführung der Signalverarbeitungseinrichtung 8, bei der manche Einheiten bzw. Subeinheiten durch eine eigene elektronische Schaltung ausgebildet sind und manche lediglich durch einen eigenen Programmbaustein.

Davon unabhängig ist die Ermittlungseinheit 22 ausgebildet und eingerichtet für eine sogenannte Eigenstimmermittlung in zumindest einem Betriebsmodus des Hörgerätes 4. Daher ist das entsprechende Hörgerät 4 eingerichtet, in dem zumindest einem Betriebsmodus automatisch zu erkennen, wann die Stimme eines Trägers des Hörgerätes 4 aktiv ist und wann nicht. In diesem zumindest einem Betriebsmodus gibt die Ermittlungseinheit 22 dann ein Ermittlungsergebnis aus, bei dem es sich bevorzugt um ein einfaches binäres Signal handelt, welches angibt, wann die Eigenstimme, also die Stimme des Trägers des Hörgerätes 4, gerade aktiv ist oder nicht.

Basierend auf diesem Ermittlungsergebnis oder in Abhängigkeit von diesem Ermittlungsergebnis, welches im Ausführungsbeispiel gemäß Fig. 2 der Haupteinheit 18 zugeführt wird, erfolgt dann typischerweise die Generierung eines Ausgangssignals für den Ausgangswandler 10 des Hörgerätes 4 durch die Haupteinheit 18. Dabei werden dann unterschiedliche Signalverarbeitungsprozesse oder Signalverarbeitungsprogramme zur Generierung des Ausgangssignals genutzt, je nachdem, ob das Ermittlungsergebnis angibt, dass die eigene Stimme des Trägers gerade aktiv ist oder nicht.

Unabhängig vom gerade genutzten Signalverarbeitungsprozess erfolgt die Generierung des Ausgangssignals derart, dass hierdurch die Hauptfunktion des Hörgerätes 4 erfüllt wird, nämlich das Verstärken akustischer Signale. Dies geschieht nach an sich bekanntem Prinzip durch eine Verarbeitung von Eingangssignalen, die mit den Eingangswandlern 6 generiert werden. Diese Eingangssignale werden in den Analog-Digital-Wandlern 16 digitalisiert und als digitale Eingangssignale der Haupteinheit 18 zugeführt. Hier werden die digitalen Eingangssignale mittels der zuvor genannten unterschiedlichen Signalverarbeitungsprozesse verarbeitet, wodurch ein digitales Ausgangssignal generiert wird. Dieses digitale Ausgangssignal wird dann im Digital-Analog-Wandler gewandelt und schließlich dem Ausgangswandler 10 zugeführt.

Parallel werden die digitalen Eingangssignale zudem auch der Ermittlungseinheit 22 zugeführt, so wie dies in Fig. 2 angedeutet ist. Hier werden die digitalen Eingangssignale dann genutzt für die zuvor genannte Eigenstimmermittlung. Diese Eigenstimmermittlung erfolgt dabei mit Hilfe zweier Subeinheiten der Ermittlungseinheit 22, nämlich mittels eines neuronalen Netzwerks 24, also eines künstlichen neuronalen Netzwerks, sowie mittels einer dem neuronalen Netzwerk 24 vorgeschalteten Vorstufe 26. Die Vorstufe 26 ist dabei typischerweise als eine Multi-Frequenzkanal-Vorstufe ausgebildet

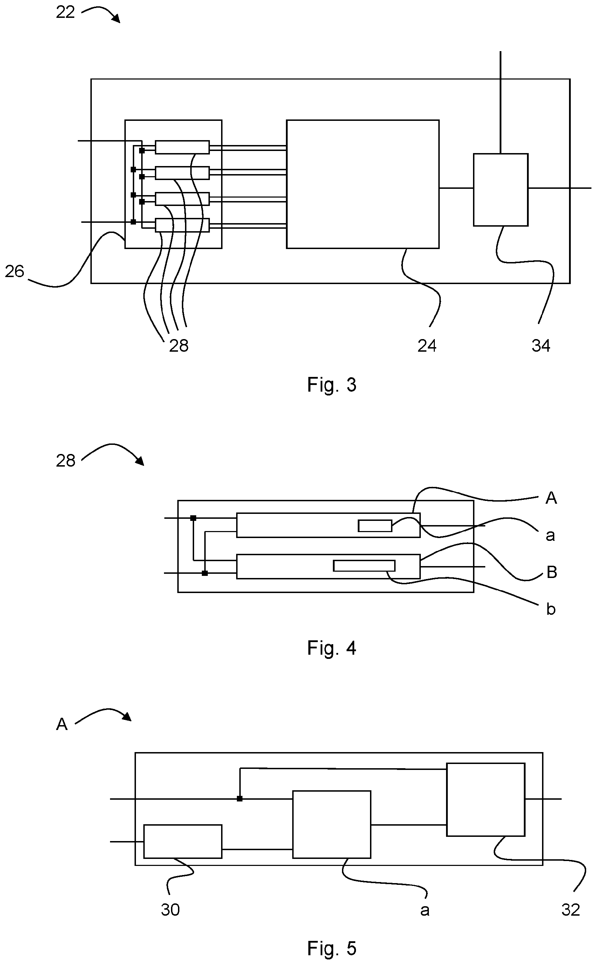

D. h., dass die beiden digitalen Eingangssignale einer nicht dargestellten Filterbank der Signalverarbeitungseinrichtung 8 zugeführt und hier jeweils in Teilsignale zerlegt werden. Die entsprechende Filterbank ist dabei derart ausgestaltet, dass durch diese Filterbank zwei oder mehr Frequenzbereiche vorgegeben sind und zumindest näherungsweise eine Zerlegung in Teilsignale derart erfolgt, dass jedes Teilsignal alle Frequenzanteile eines digitalen Eingangssignals aufweist, die genau einem der Frequenzbereiche zuzuordnen sind. Exemplarisch ist die Multi-Frequenzkanal-Vorstufe als 4-Frequenzkanal-Vorstufe ausgebildet, so wie dies in Fig. 3 angedeutet ist.

Entsprechende Filterbänke sind dabei prinzipiell bekannt und Hörgeräte mit einer solchen Filterbank werden üblicherweise als Multi-Frequenzkanal-Hörgeräte bezeichnet. Im Ausführungsbeispiel sind die Hörgeräte 4 des Hörgerätesystems 2 als 4-Frequenzkanal-Hörgeräte ausgebildet und weisen jeweils eine 4-Frequenzkanal-Vorstufe auf. Somit ist dann das Frequenzspektrum in 4 Frequenzbereiche, auch Frequenzkanäle genannt, aufgeteilt. Infolgedessen werden dann der Ermittlungseinheit 22 die beiden digitalen Eingangssignale zerlegt in Teilsignale zugeführt. Diese Teilsignale stehen dann der Vorstufe 26 zu Verfügung und werden hier frequenzkanalweise weiterverarbeitet.

Die frequenzkanalweise Weiterverarbeitung erfolgt dabei mit Hilfe von Subeinheiten der Vorstufe 26, nämlich Kanalbausteinen 28, wobei für jeden Frequenzkanal k aus k=1 ...4, also jeden Frequenzbereich k, ein Kanalbaustein 28 realisiert ist. Exemplarisch ist ein solcher Kanalbaustein 28 in Fig. 4 dargestellt.

Jeder Kanalbaustein 28 wiederum weist als eine erste Subeinheit einen ersten Subbaustein A und als eine zweite Subeinheit einen zweiten Subbaustein B auf. Ein jeder Subbaustein A weist weiter als eine wesentliche Komponente ein Filter a auf, welches einem ersten Filtertyp entspricht. Ein jeder Subbaustein B wiederum weist als eine wesentliche Komponente ein Filter b auf, welches einem zweiten Filtertyp entspricht. Die Vorstufe 26 weist daher in Summe vier Filter des Filtertyps a auf und vier Filter des Filtertyps b.

Sowohl bei einem Filter a des ersten Filtertyps als auch bei einem Filter b des zweiten Filtertyps handelt es sich um ein Filter zur räumlichen Trennung. Hierbei ist jeder der beiden Filtertypen derart ausgebildet, dass mit diesen jeweils eine gemeinsame Richtcharakteristik für die zwei zuvor genannten Mikrofone des Hörgeräts 4 realisiert wird, nämlich eine erste Richtcharakteristik durch den ersten Filtertyp und eine zweite Richtcharakteristik durch den zweiten Filtertyp.

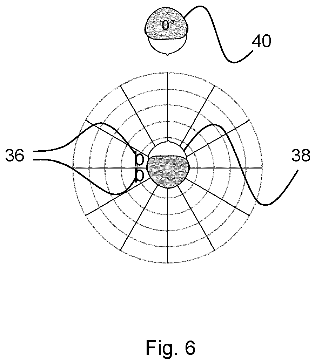

Die beiden Richtcharakteristiken unterscheiden sich dabei insbesondere im Hinblick auf die vorgegebenen Raumrichtungen, in denen die Empfindlichkeit der jeweiligen Richtcharakteristik ihr Maximum erreicht. Die entsprechenden beiden Raumrichtungen werden dabei zweckdienlicherweise bezogen auf eine Frontalrichtung bei 0° vorgegeben, in die typischerweise das Gesicht des Trägers des Hörgerätes zeigt, so wie in Fig. 6 angedeutet. Für den ersten Filtertyp wird im Ausführungsbeispiel eine Raumrichtung bei 0° vorgegeben und für den zweiten Filtertyp wird eine Raumrichtung bei 180° vorgegeben.

Bevorzugt sind die beiden Filtertypen weiter als statische Filter ausgebildet mit jeweils fest vorgegebenen Filterkoeffizienten. Hierbei sind die Filterkoeffizienten bevorzugt vom Hersteller ausgewählt und vorgegeben.

Bei der so ausgestalteten Vorstufe 26 werden dann im Frequenzkanal k den beiden Subbausteinen A, B des k-ten Kanalbausteins 28 jeweils zwei Teilsignale zugeführt, nämlich das k-te Teilsignal des einen digitalen Eingangssignals und das k-te Teilsignal des anderen digitalen Eingangssignals. Sowohl im Subbaustein A des k-ten Kanalbausteins 28 als auch im Subbaustein B des k-ten Kanalbausteins 28 wird dann jeweils ein Filtersignal generiert und basierend auf diesem Filtersignal wird eine reellwertige Dämpfungsgröße ermittelt.

In Summe werden somit acht reellwertige Dämpfungsgrößen ermittelt und jede dieser Dämpfungsgrößen wird dann mit einem eigenen Informationssignal an das neuronale Netzwerk 24 weitergegeben. Somit werden dem neuronalen Netzwerk im Ausführungsbeispiel acht Informationssignale zugeführt.

In Fig. 5 ist nun exemplarisch der k-te Subbaustein A wiedergegeben. Die nachfolgenden Erläuterungen lassen sich jedoch analog auch auf jeden anderen der Subbausteine übertragen, ob Subbausteine A oder Subbausteine B. Gemäß Fig. 5 werden dem k-ten Subbaustein A nun das k-te Teilsignal des einen digitalen Eingangssignals und das k-te Teilsignal des anderen digitalen Eingangssignals zugeführt, nachfolgend kurz das erste Teilsignal und das zweite Teilsignal genannt.

Das erste Teilsignal wird dann bevorzugt dem Filter a des k-ten Subbausteins A unbearbeitet zugeführt. Das zweite Teilsignal wird dagegen vorzugsweise bearbeitet dem Filter a des k-ten Subbausteins A zugeführt, wobei das zweite Teilsignal hierfür in einer Equalizer-Einheit 30 bearbeitet wird. Mittels Filter a und Equalizer-Einheit 30 wird dann die zuvor beschriebene räumliche Trennung umgesetzt.

Basierend auf den beiden Teilsignalen wird dann durch das Filter a ein Filtersignal generiert und einer Messeinheit 32 zugeführt. Dieser Messeinheit 32 wird zudem das unbearbeitete erste Teilsignal zugeführt und basierend auf dem Filtersignal sowie dem ersten Teilsignal wird dann in der Messeinheit 32 schließlich eine der zuvor genannten Dämpfungsgrößen ermittelt.

Die zuvor beschriebene Ausführung des k-ten Subbausteins A stellt hierbei nur eine zweckdienliche Ausführung dar. Bei dieser hat die Equalizer-Einheit 30 typischerweise die Funktion, das eingehende Signal mit einem frequenzabhängigen, komplexwertigen skalaren Gewicht zu multiplizieren. In einer alternativen Ausführung übernimmt das Filter a diese Funktion und auf die Equalizer-Einheit 30 wird dann verzichtet.

Zur Ermittlung der Dämpfungsgröße werden in der Messeinheit 32 beispielweise zunächst Hilfsgrößen ermittelt, nämlich eine erste Hilfsgröße basierend auf dem ersten Teilsignal und eine zweite Hilfsgröße basierend auf dem Filtersignal, und diese Hilfsgrößen werden dann einander gegenübergestellt. Bei einer solchen Hilfsgröße handelt es sich zum Beispiel um eine Leistung.

Gemäß einer nicht explizit gezeigten Alternative wird in der Messeinheit 32 anstatt einer reellwertigen Dämpfungsgröße eine komplexwertige Dämpfungsgröße ermittelt. Dazu werden in der Messeinheit 32 typischerweise Amplitudeninformationen und Phaseninformationen in den Signalen ausgewertet, also im ersten Teilsignal einerseits und im Filtersignal andererseits.

Für diese Alternative sind dann zwei Ausführungsvarianten vorgesehen. Im Falle der ersten Ausführungsvariante liegen in Summe acht komplexwertige Dämpfungsgrößen vor und jede der acht komplexwertigen Dämpfungsgrößen wird mit einem eigenen Informationssignal an das neuronale Netzwerk 24 weitergegeben.

Im Falle der zweiten Ausführungsvariante liegen in Summe zweimal acht Größen vor und jede der sechzehn Größen wird mit einem eigenen Informationssignal an das neuronale Netzwerk 24 weitergegeben. In diesem Fall werden zum Beispiel Realteil und Imaginärteil oder Amplitude und Phase in getrennten Informationssignalen an das neuronale Netzwerk 24 weitergegeben.

Darüber hinaus ist es in einigen Anwendungsfällen zweckdienlich zusätzlich zu den zuvor genannten Informationssignalen eines oder mehrere weitere Informationssignale dem neuronalen Netzwerk 24 zuzuführen, also Informationssignale mit anderen Informationen.

Im gezeigten Ausführungsbeispiel werden jedoch der Einfachheit halber dem neuronalen Netzwerk 24 exemplarisch genau acht Informationssignale zugeführt, wobei acht reellwertige Dämpfungsgrößen auf die zuvor beschriebene Art ermittelt werden und wobei jede dieser Dämpfungsgrößen mit einem eigenen Informationssignal an das neuronale Netzwerk 24 weitergegeben wird.

Dieses neuronale Netzwerk 24 weist nun eine Anzahl nicht explizit dargestellter künstlicher Neuronen auf, die in einer oder mehreren Schichten angeordnet sind. Mittels dieser Neuronen erfolgt dann eine Bewertung der ermittelten Dämpfungsgrößen, so dass ein Bewertungsergebnis ermittelt wird. Dieses Bewertungsergebnis wird schließlich vom neuronalen Netzwerk 24 ausgegeben. Im Ausführungsbeispiel wird dabei als Bewertungsergebnis ein Bewertungssignal mit einer Art Wahrscheinlichkeitswert ausgegeben, also ein Wert im Wertebereich von 0 bis 1.

Das Bewertungssignal wird dann einer nicht explizit dargestellten Komparatoreinheit einer Endstufe 34 der Ermittlungseinheit 22 zugeführt und hier einer Referenz gegenübergestellt, nämlich einem Referenzwert. Dabei ist der Referenzwert fest vorgegeben und liegt typischerweise im Wertebereich von 0,3 bis 0,7 und insbesondere von 0,4 bis 0,6, also zum Beispiel bei 0,5. Hierdurch wird dann typischerweise von der Komparatoreinheit ein Ermittlungsergebnis generiert, welches angibt, ob durch die Ermittlungseinheit 22 eine Eigenstimme ermittelt wurde oder nicht.

Der zuvor beschriebene Prozess zur Eigenstimmermittlung läuft in dem zumindest einem Betriebsmodus des Hörgerätes 4 üblicherweise permanent im Hintergrund und bevorzugt gilt dies für jedes der beiden Hörgeräte 4 des Hörgerätesystems 2. Somit wird dann in beiden Hörgeräten 4 unabhängig voneinander jeweils ein zuvor beschriebenes Ermittlungsergebnis generiert. Basierend auf dem jeweiligen Ermittlungsergebnis erfolgt dann die Generierung des jeweiligen Ausgangssignals im jeweiligen Hörgerät 4.

Bevorzugt ist jedoch eine Ausführungsvariante, bei der von den zuvor genannten Komparatoreinheiten der beiden Hörgeräte 4 jeweils lediglich ein vorläufiges Ermittlungsergebnis generiert wird. Weiter bevorzugt übermittelt jedes Hörgerät 4 sein vorläufiges Ermittlungsergebnis mit Hilfe der Sende- und Empfangseinheit 14 sowie der damit verbundenen Antenneneinheit 12 an das jeweils andere Hörgerät 4. In jedem der beiden Hörgeräte 4 werden dann weiter die beiden vorläufigen Ermittlungsergebnisse der beiden Ermittlungseinheiten 22 der beiden Hörgeräte 4 gemeinsam ausgewertet. Dies geschieht typischerweise in einer nicht explizit dargestellten Logikeinheit der Endstufe 34. Dadurch wird schließlich das Ermittlungsergebnis generiert, also das endgültige Ermittlungsergebnis.

Wie bereits zuvor ausgeführt sind die beiden Filtertypen der Filter a,b der Subbausteine A,B bevorzugt als statische Filter ausgebildet mit jeweils fest vorgegebenen Filterkoeffizienten. Hierbei sind die Filterkoeffizienten vorzugsweise vom Hersteller vorgegeben. Weiter bevorzugt sind dann zumindest die Ermittlungseinheiten 22 der beiden Hörgeräte 4 des Hörgerätesystems 2 nicht personalisiert oder individualisiert.

Die entsprechenden Filterkoeffizienten werden außerdem bevorzugt in einem Koeffizienten-Ermittlungs-Verfahren ermittelt. Das Ermitteln erfolgt dabei vorzugsweise ohne Zutun des späteren Trägers, also des Endkunden. Zweckdienlich ist es zudem, wenn für das Ermitteln dieser Filterkoeffizienten im Zuge des Koeffizienten-Ermittlungs-Verfahrens ein Hörgeräte-Dummy genutzt wird. Der Hörgeräte-Dummy weist zumindest zwei in Fig. 6 angedeutete Test-Eingangswandler 36 auf. Während des Koeffizienten-Ermittlungs-Verfahrens werden dann vorzugsweise mit den Test-Eingangswandlern 36 in verschiedenen Tests jeweils Eingangssignale generiert. Diese werden zweckdienlicherweise aufgezeichnet und zum Beispiel in einem nicht näher dargestellten Rechner ausgewertet.

Bei den verschiedenen Tests werden bevorzugt unterschiedliche Szenarien mit verschiedenen Testpersonen nachgestellt. Es agieren weiter bevorzugt bei den Tests verschiedene Testpersonen als Test-Träger 38 für die Testvorrichtung und zudem bevorzugt verschiedene Testpersonen als Nutzsignalquelle 40 im Sinne eines Gesprächspartners, wobei die Nutzsignalquellen 40 vorzugsweise frontal vor den Test-Trägern 38 positioniert sind, wie dies in Fig. 6 angedeutet ist.

Mit Hilfe des Rechners werden dann weiter bevorzugt bei jedem Test und für jedes nachgestellte Szenario passende Filterkoeffizienten ermittelt und zwar insbesondere sowohl für die zuvor beschriebenen Filter a als auch für die Filter b. Auf diese Weise ergibt sich in Summe für jeden Filterkoeffizienten ein Datensatz mit einer Vielzahl an passenden Werten.

Auf die entsprechenden Datensätze wird dann zum Beispiel ein sogenannter k-Means-Algorithmus angewendet, um diejenigen Filterkoeffizienten zu erhalten, die für die Filter a,b der Subbausteine A,B schließlich vorgegeben werden.

### Bezugszeichenliste

- 2: Hörgerätesystem
- 4: Hörgerät
- 6: Eingangswandler
- 8: Signalverarbeitungseinrichtung
- 10: Ausgangswandler
- 12: Antenneneinheit
- 14: Sende- und Empfangseinheit
- 16: Analog-Digital-Wandler
- 18: Haupteinheit
- 20: Digital-Analog-Wandler
- 22: Ermittlungseinheit
- 24: neuronales Netzwerk
- 26: Vorstufe
- 28: Kanalbaustein
- 30: Equalizer-Einheit
- 32: Messeinheit
- 34: Endstufe
- 36: Test-Eingangswandler
- 38: Test-Träger
- 40: Nutzsignalquelle

- A: Subbaustein
- B: Subbaustein
- a: Filter
- b: Filter

## Patentansprüche

1. Verfahren zum Ermitteln einer Aktivität einer Eigenstimme eines Trägers eines Hörgerätes (4) mit Hilfe einer Signalverarbeitungseinrichtung (8) des Hörgerätes (4),
wobei
- mittels eines ersten Eingangswandlers (6) des Hörgerätes (4) ein erstes Eingangssignal und mittels eines zweiten Eingangswandlers (6) des Hörgerätes (4) ein zweites Eingangssignal generiert wird,
- die beiden Eingangssignale einer Ermittlungseinheit (22) der Signalverarbeitungseinrichtung (8) zugeführt werden, welche ein neuronales Netzwerk (24) sowie eine dem neuronalen Netzwerk (24) vorgeschaltete Vorstufe (26) aufweist,
- mittels der Vorstufe (26) basierend auf den beiden Eingangssignalen Informationssignale generiert werden,
- die Informationssignale durch das neuronale Netzwerk (24) bewertet werden und
- basierend auf der Bewertung der Informationssignale durch das neuronale Netzwerk (24) von der Ermittlungseinheit (22) ein Ermittlungsergebnis ausgegeben wird.

2. Verfahren nach Anspruch 1,
wobei auf eine Personalisierung der Ermittlungseinheit (22) verzichtet wird.

3. Verfahren nach Anspruch 1 oder 2,
wobei das neuronale Netzwerk (24) mit Hilfe einer Anzahl aufgezeichneter akustischer Signale trainiert wird, bei denen Eigenstimmen verschiedener Testträger aufgezeichnet sind.

4. Verfahren nach einem der Ansprüche 1 bis 3,
wobei die Vorstufe (26) zwei Filter (a,b) aufweist, nämlich ein erstes Filter (a) und ein zweites Filter (b), wobei das erste Filter (a) einem ersten Filtertyp entspricht und das zweite Filter (b) einem zweiten Filtertyp und wobei mittels des ersten Filters (a) ein erstes Filtersignal generiert wird und mittels des zweiten Filters (b) ein zweites Filtersignal.

5. Verfahren nach Anspruch 4,
wobei der erste Filtertyp ausgebildet ist zum Extrahieren von Nutzsignalen von Nutzsignalquellen und wobei der zweite Filtertyp ausgebildet ist zum Ausblenden von Eigenstimmen.

6. Verfahren nach Anspruch 4 oder 5,
wobei die beiden Filtertypen als statische Filter (a,b) ausgebildet sind mit fest vorgegebenen Filterkoeffizienten.

7. Verfahren nach Anspruch 6,
wobei die Filterkoeffizienten für den zweiten Filtertyp basierend auf einer Auswertung aufgezeichneter akustischer Signale vorgegeben werden, bei denen Eigenstimmen verschiedener Testträger aufgezeichnet sind.

8. Verfahren nach Anspruch 7,
wobei für die Auswertung zumindest ein adaptives Test-Filter genutzt wird.

9. Verfahren nach einem der Ansprüche 4 bis 8,
wobei jedes der Filtersignale zur Generierung eines Informationssignals mit einem Referenzsignal verknüpft wird, welches auf zumindest einem der beiden Eingangssignale basiert.

10. Verfahren nach Anspruch 9,
wobei durch die Verknüpfung eines der Filtersignale mit einem der Referenzsignale eine Dämpfungsgröße ermittelt wird, die mit dem entsprechenden Informationssignal an das neuronale Netzwerk (24) übermittelt wird.

11. Verfahren nach einem der Ansprüche 1 bis 10,
wobei die Informationssignale durch das neuronale Netzwerk (24) bewertet werden und wobei durch das neuronale Netzwerk (24) als Bewertung ein Prädiktionswert ausgegeben wird.

12. Verfahren nach Anspruch 11,
wobei die Informationssignale durch das neuronale Netzwerk (24) bewertet werden, welches als ein rekurrentes neuronales Netzwerk (24) ausgebildet ist, und wobei durch das neuronale Netzwerk (24) als Bewertung der Prädiktionswert ausgegeben wird.

13. Verfahren nach einem der Ansprüche 1 bis 12,
wobei durch die Ermittlungseinheit (22) ein vorläufiges Ermittlungsergebnis ermittelt wird, wobei das vorläufige Ermittlungsergebnis zusammen mit einem weiteren vorläufigen Ermittlungsergebnis in der Ermittlungseinheit (22) ausgewertet wird, welches von einer weiteren Ermittlungseinheit (22) in einem weiteren Hörgerät (4) ermittelt und von dem weiteren Hörgerät (4) übermittelt wird, und wobei durch das Auswerten der beiden vorläufigen Ermittlungsergebnisse das Ermittlungsergebnis in der Ermittlungseinheit (22) ermittelt wird.

14. Hörgerät (4) eingerichtet zur Ausführung zumindest eines Verfahrensschrittes eines Verfahrens nach einem der vorherigen Ansprüche in zumindest einem Betriebsmodus.

15. Hörgerätesystem (2) aufweisend zwei Hörgeräte (4) nach dem vorherigen Anspruch.
